# EUROPÄISCHE PATENTSCHRIFT

(11) **EP 2 688 192 B1**
(45) Veröffentlichungstag und Bekanntmachung des Hinweises auf die Patenterteilung: **05.06.2019**
(21) Anmeldenummer: 13003433.3
(22) Anmeldetag: 08.07.2013
(51) Int. Cl.: H02N 3/00

(54) **Windenergieanlage**
Wind energy system
Eolienne

(30) Priorität: 16.07.2012 DE 102012014088
(43) Veröffentlichungstag der Anmeldung: 22.01.2014
(73) Patentinhaber: Stahl, Stefan, 67582 Mettenheim (DE)
(72) Erfinder: Stahl, Stefan, 67582 Mettenheim (DE)
(74) Vertreter: Plate, Jürgen

(56) Entgegenhaltungen:
- WO-A1-2012/054503
- US-A- 3 297 887

## Beschreibung

Die Erfindung betrifft ein Verfahren zur direkten Umwandlung von Windenergie in elektrische Energie, bei dem Luft in einem Luftstrom mit Hilfe eines Ionisators ionisiert, der Luftstrom durch ein elektrisches Feld geführt wird, das als Gegenfeld für Ionen in der Luft wirkt, und bei dem die Ionen an einer Sammelelektrode, deren elektrisches Potential höher liegt als das des Ionisators, aufgefangen und entladen werden. Die entsprechende Vorrichtung zur direkten Umwandlung von Windenergie in elektrische Energie weist keine beweglichen Teile auf (Solid-State-Windturbine).

Herkömmliche Windenergieanlagen bestehen in der Regel aus einem Rotor, der durch Wind in Drehung versetzt wird, wobei die Drehbewegung mit Hilfe eines elektrischen Generators in elektrische Energie umgewandelt wird. Solche Windräder weisen häufig eine Höhe von 60 m und mehr auf, so dass sie das Landschaftsbild erheblich stören. Von den Rotoren solcher Windkraftanlagen gehen zudem erhebliche Geräusche aus, was einen Standort in unmittelbarer Nähe von Wohnhäusern ausschließt.

Ein Verfahren zur direkten Umwandlung von Windenergie in elektrische Energie ist in der US 4,146,800 beschrieben. Die zugehörige Vorrichtung weist keine mechanisch beweglichen Teile auf. In ihr werden Ionen erzeugt, insbesondere durch Corona-Entladung, die dann vom Wind gegen den Widerstand eines elektrostatischen Felds bewegt werden. Dadurch wird schließlich elektrischer Strom erzeugt. Das Verfahren hat den Nachteil, dass nur ein geringer Anteil der erzeugten Ionen in hinreichend geringer Wegdistanz auf den als Sammelelektrode wirkenden Erdboden trifft, um dort entladen zu werden. Dementsprechend ist der durch die Ionen bewirkte Stromfluss bzw. die Effizienz der Energiegewinnung gering und hängt sehr stark von der Leitfähigkeit des umgebenden Erdbodens bzw. den räumlichen Verhältnissen in Nähe der Vorrichtung ab. Die Emission großer Mengen an chemisch reaktiven Ionen in die unmittelbare Umgebung ist des Weiteren aus Umweltschutzaspekten problematisch bzw. deren Auswirkung über längere Zeiträume unerforscht. Da sich isolierende Materialien im Bereich mehrerer Meter Abstand zur Anlage elektrostatisch im kV-Bereich aufladen, existiert ein erhebliches Stromschlagrisiko für Menschen und Tiere, was den Betrieb solcher Anlagen in urbanen Bereichen unmöglich macht. Auch in Ausführungsformen des Verfahrens gemäß der US 4,146,800, in denen anstelle des Erdbodens eine separate Sammelelektrode verwendet wird, durchlaufen die Ionen ein von der Sammelelektrode ausgehendes repulsives Potential. Ein Großteil der Ionen wird daher von der Sammelelektrode abgestoßen und an anderer Stelle entladen, so dass er nicht zur Energiegewinnung beiträgt.

Weitere Verfahren zur direkten Umwandlung von Windenergie in elektrische Energie werden in den Dokumenten WO 2012/054503 A1 und US 3,297,887 beschrieben.

Es besteht daher die Aufgabe, eine Vorrichtung zur Umwandlung von Windenergie in elektrische Energie zu schaffen, die die genannten Nachteile nicht aufweist. Sie soll praktisch geräuschlos sein und einen nur geringen Raumbedarf haben, damit sie auch an Hausfassaden oder auf Hausdächer montiert werden kann. Insbesondere besteht die Aufgabe darin, die in der US 4,146,800 beschriebene Vorrichtung wie auch das dort offenbarte Verfahren zu verbessern.

Gelöst wurde die Aufgabe durch die Ionisierung von Luft, wobei die Ionen von dem Wind durch das elektrische Gegenfeld einer Gegenelektrode bewegt werden. Die entsprechende Vorrichtung kommt ohne bewegliche Teile aus (Solid-State-Windturbine).

Gegenstand der Erfindung ist somit ein Verfahren zur direkten Umwandlung von Windenergie in elektrische Energie, bei dem elektrisch geladene Moleküle erzeugt und in die umgebende Luft injiziert werden, die dann vom Wind durch ein elektrostatisches Gegenfeld einer Sammelelektrode bewegt und an der Sammelelektrode wieder entladen und damit der Luft zum überwiegenden Teil entzogen werden, dadurch gekennzeichnet, dass in Richtung der Luftströmung vor der Sammelelektrode eine Gegenelektrode angeordnet ist, deren elektrisches Potential so eingestellt wird, dass es höher liegt als das der Sammelelektrode, jedoch von den elektrisch geladenen Molekülen mit Hilfe der Windenergie noch überwunden werden kann.

An der Sammelelektrode geben die Ionen die im elektrischen Gegenfeld gewonnene Energie wieder ab. Wenn die Ionen das elektrische Feld der Gegenelektrode durchlaufen haben, wirkt die Sammelelektrode anziehend auf sie. Es wird damit ein wesentlich höherer Anteil der Ionen zur Stromerzeugung genutzt als in dem Verfahren gemäß der US 4,146,800. Die dadurch gewonnene elektrische Leistung P = U_{D} • I ergibt sich aus der Potentialdifferenz U_{D} und dem aus dem Entladevorgang resultierenden elektrischen Strom I.

Die Leistung kann durch einen geregelten elektronischen Leistungsoptimierer (Maximum Power Point-, MPP-Tracker) maximiert werden, der in Analogie zur Verwendung bei Photovoltaik-Anlagen die angelegten Spannungen variiert. Das elektrische Gegenfeld wird dabei entsprechend der Windgeschwindigkeit geregelt. Je stärker der Wind, um so stärker kann das Gegenfeld sein und um so mehr elektrische Energie lässt sich gewinnen.

In der einfachsten Ausführungsform besteht die erfindungsgemäße Vorrichtung demgemäß aus einem Ionisator, mit dem sich Luftmoleküle ionisieren lassen, einer in Windrichtung dahinter angeordneten Sammelelektrode, die ein elektrisches Gegenfeld erzeugt, und mindestens eine Gegenelektrode. Die Gegenelektrode ist - in Richtung der Luftströmung - vor der Sammelelektrode angeordnet. Sie befindet sich auf einem elektrischen Potential U_{G}, das höher liegt als das Potential U_{S} der Sammelelektrode. Die Gegenelektrode ist beispielsweise als Stab oder Gitter ausgeführt. Nach dem Passieren der Gegenelektrode erfahren die Ionen eine anziehende Kraft, die von dem Potential U_{S} der Sammelelektrode ausgeht.

Der lonisator umfasst vorzugsweise mindestens einen dünnen Metalldraht, wie er auch bei der Erzeugung von Corona-Entladungen verwendet wird. Der Draht hat bevorzugt einen runden Querschnitt und eine Dicke von 0,05 bis 1 mm. Auch das Erzeugen einer Corona-Entladung an einer Metallkante oder -klinge mit geringem Krümmungsradius ist möglich. Corona-Behandlungen sind beispielsweise aus der Kunststoff-Folien-Herstellung bekannt. An dem Draht oder der Metallkante/-klinge wird durch Gleich- oder Wechselspannung U_{I} eine dauerhafte oder gepulste Corona-Gasentladung erzeugt. Die dafür erforderliche Spannung beträgt typischerweise 1 bis 10 kV. Die Ionen lassen sich auch erzeugen durch eine dielektrische Barriereentladung, die beispielsweise durch Anlegen einer dauerhaften oder gepulsten Hochfrequenz, z.B. ISM-Frequenz 13,56 MHz, Amplitude im Bereich von 1 kV, betrieben wird. Ferner lassen sich mit einem Sprühdraht freie Elektronen erzeugen, die dann Luftmoleküle ionisieren. Zusätzlich zu den genannten elektrisch betriebenen Ionisatoren kann UV-Strahlung oder andere energiereiche Strahlung die Ionisierung der Luft unterstützen.

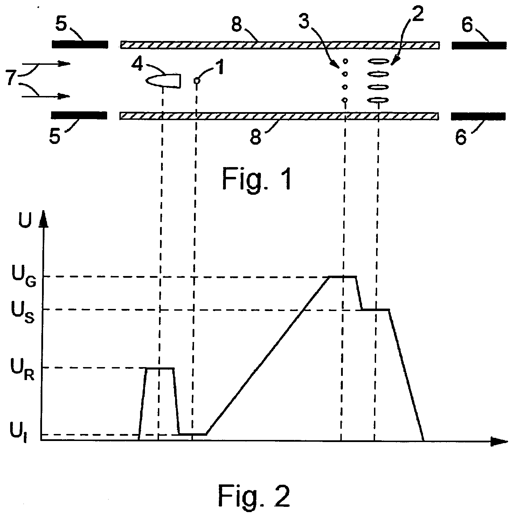

Die Sammelelektrode ist dagegen vorzugsweise gitterförmig ausgestaltet. Der Abstand zwischen lonisator und Sammelelektrode beträgt zweckmäßig etwa 5 bis 20 cm, insbesondere etwa 10 cm. An der Sammelelektrode geben die Ionen im Gegenfeld gewonnene Energie wieder ab und werden weitgehend neutralisiert. Dazu verfügt sie über eine relativ große Oberfläche. Um den Luftwiderstand dennoch gering zu halten, weisen die Elemente, aus denen die Sammelelektrode besteht, vorzugsweise eine ovale Form auf, wie in der nachfolgenden Fig. 1 schematisch dargestellt.

In Fig. 1 ist eine Ausführungsform mit einem lonisator **1,** einer Sammelelektrode **2,** einer Gegenelektrode **3,** einer Rückhaltelektrode **4,** sowie geerdeten Ein- und Austrittselektroden **5** und **6** gezeigt. Die Pfeile **7** geben die Strömungsrichtung der Luft an. Die Elektroden sind in einem Strömungskanal **8** angeordnet.

In Fig. 2 ist das elektrische Potential der jeweiligen Elektroden dargestellt.

Die zur Energiegewinnung nutzbaren elektrischen Ströme und Spannungen liegen zwischen dem lonisator und der Sammelelektrode an (Potentialdifferenz U_{D} = U_{S} - U_{I}) und werden einem elektrischen Wandler zugeführt. Dieser wandelt den Strom in üblichen Wechsel- oder Drehstrom um. Daneben hat der Wandler die Aufgabe, alle an der erfindungsgemäßen Vorrichtung vorhandenen Elektroden mit der jeweils nötigen Spannung zu versorgen. Die Spannungen werden zweckmäßig automatisch optimiert (MPP-Tracking).

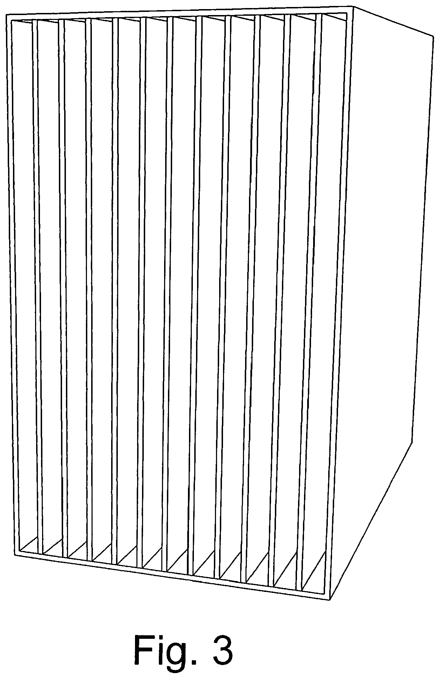

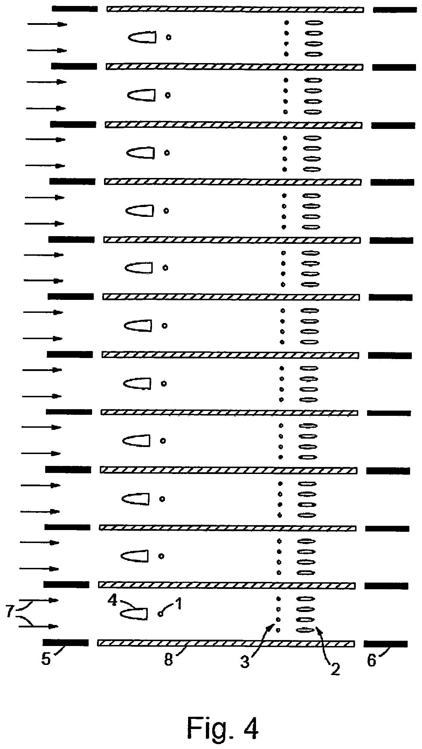

Weiterhin hat es sich als zweckmäßig erwiesen, die Elektroden in einem Strömungskanal anzuordnen. Dieser hat allgemein einen rechteckigen Querschnitt, um möglichst lange Elektroden verwenden zu können. Die Länge der Kanäle beträgt allgemein etwa 1 bis 50 cm, bevorzugt 5 bis 30 cm, besonders bevorzugt 8 bis 20 cm. Für die erfindungsgemäße Vorrichtung werden zweckmäßig Materialien gewählt, die gegenüber ionisierten Luftmolekülen inert sind. Die Wandungen des Strömungskanals können aus isolierendem, schwach elektrisch leitendem oder metallischem Material bestehen, das mehrfach unterteilt werden kann, um durch geeignete elektrische Potentiale die Ionenerzeugung und lonenbewegung innerhalb des Kanals zu unterstützen. Geeignet ist beispielsweise Edelstahl. An den Enden des Strömungskanals befinden sich zweckmäßig zudem geerdete Ein- bzw. Austrittselektroden. Diese Elektroden verhindern, dass Ionen aus dem Strömungskanal austreten, insbesondere solche Ionen, die noch nicht an der Sammelelektrode entladen wurden. Mehrere der beschriebenen, mit Elektroden versehenen Luftkanäle lassen sich problemlos neben- und/oder übereinander anordnen. In Fig. 3 ist ein solches Modul mit mehreren nebeneinander angeordneten Kanälen dargestellt. Fig. 4 zeigt schematisch das Modul von oben. Die Bezugsziffern in Fig. 4 haben die gleiche Bedeutung wie in Fig.1.

In einer bevorzugten Ausführungsform umfasst die erfindungsgemäße Vorrichtung darüber hinaus mindestens eine Rückhalteelektrode. Die Rückhalteelektrode ist - in Windrichtung gesehen - unmittelbar vor der Ionisator-Elektrode angeordnet. Die Rückhaltelektrode befindet sich bevorzugt auf einem elektrischen Potential U_{R}, das die am lonisator erzeugten ionisierten Luftmoleküle abstößt und in Richtung der Sammelelektrode lenkt. Unabhängig davon kann die Rückhalteelektrode so stabil ausgestaltet sein, dass sie die Ionisator-Elektrode vor mechanischer Beschädigung schützt, wie sie beispielsweise durch Pflanzenblätter oder Insekten hervorgerufen werden kann.

Die Gegenelektrode ist beispielsweise als Stab oder Gitter ausgeführt. Sie weist ein Potential U_{G} auf, das höher liegt als das Potential U_{S} der Sammelelektrode. Nach dem Passieren der Gegenelektrode erfahren die Ionen daher eine anziehende Kraft, die von dem Potential U_{G} der Sammelelektrode ausgeht.

In Fig. 2 ist das elektrische Potential der einzelnen Elektroden dargestellt. Die Darstellung bezieht sich auf positiv geladene Luftmoleküle. Für den Betrieb der Vorrichtung mit negativ geladenen Ionen ist die Polarität aller Spannungen zu invertieren. Typische Betriebsspannungen liegen im einstelligen Kilovolt-Bereich bei einer Kanallänge von etwa 5 bis 10 cm. Sie skalieren im Wesentlichen linear mit der Kanallänge, d.h. die Spannungen steigen, je länger der Kanal ist.

Alle Elektroden sind zweckmäßig so gestaltet, das sie die Strömung der Luft möglichst wenig beeinträchtigen. Die erfindungsgemäße Vorrichtung kann drehbar gestaltet sein, damit der Wind optimal hindurchströmen kann.

Die Elektroden können spiegelsymmetrisch zur Sammelelektrode angeordnet sein. In diesem Fall ist eine weitere lonisatorelektrode, gegebenenfalls auch eine weitere Rückhalteelektrode und/oder eine weitere Gegenelektrode vorhanden. Eine solche Ausgestaltung ist besonders zweckmäßig, wenn die Vorrichtung fest installiert ist. Die Luft kann dann von der einen oder anderen Seite einströmen und in beiden Fällen elektrischen Strom generieren. Alternativ kann die Gegenelektrode **3** als lonisator verwendet werden, der lonisator **1** als Gegenelektrode und die Rückhalteelektrode **4** als Sammelelektrode.

## Patentansprüche

1. Verfahren zur direkten Umwandlung von Windenergie in elektrische Energie, bei dem
Luft in einem Luftstrom mit Hilfe eines Ionisators (1) ionisiert, der Luftstrom durch das elektrische Feld einer Sammelelektrode (2) geführt wird,
das als Gegenfeld für Ionen in der Luft wirkt, und die Ionen an der Sammelelektrode, deren elektrisches Potential höher liegt als das des Ionisators, aufgefangen und entladen werden,
wobei die Ionen zunächst das elektrische Feld einer Gegenelektrode (3) durchlaufen, die
vor der Sammelelektrode (2) angebracht ist, **dadurch gekennzeichnet, dass** das elektrische Potential der Gegenelektrode (3) so eingestellt wird, dass es höher ist als das der Sammelelektrode (2),
die ionisierten Luftmoleküle das von der Gegenelektrode: (3) ausgehende elektrische Feld jedoch mit Hilfe der Windkraft noch überwinden können.

2. Verfahren gemäß Anspruch 1, **dadurch gekennzeichnet, dass** die Luft durch Corona-Entladung, dielektrische Barriereentladung oder mit Hilfe eines elektrischen Sprühdrahts ionisiert wird.

3. Verfahren gemäß Anspruch 1 oder 2, **dadurch gekennzeichnet, dass** vor dem lonisator eine Rückhalteelektrode angebracht ist, deren elektrisches Feld so eingestellt wird, dass ionisierte Luftmoleküle abgestoßen und in Richtung der Sammelelektrode gelenkt werden.

4. Verfahren gemäß einem oder mehreren der Ansprüche 1 bis 3, **dadurch gekennzeichnet, dass** der Luftstrom durch einen Strömungskanal geführt wird, in dem mindestens ein Ionisator, mindestens eine Sammelelektrode, gegebenenfalls mindestens eine Rückhalte-Elektrode und gegebenenfalls mindestens eine Gegenelektrode angeordnet sind.

5. Verfahren gemäß einem oder mehreren der Ansprüche 1 bis 4, **dadurch gekennzeichnet, dass** die Potentiale der Gegenelektrode und der Sammelelektrode der Stärke der Luftströmung entsprechend geregelt werden.

6. Vorrichtung zur direkten Umwandlung von Windenergie in elektrische Energie, mit mindestens einer Elektrode (1) zur Ionisierung von Luft und mindestens eine Sammelelektrode, (2) deren elektrisches Potential höher liegt als das der Elektrode (1) zur Ionisierung der Luft und die ein elektrisches Feld generiert, das ionisierten Luftmolekülen entgegenwirkt, von diesen mit Hilfe der Windenergie jedoch überwunden werden kann, sowie Mitteln zum Ableiten des Stroms, der durch die dabei erzeugte Spannung generiert wird, **dadurch gekennzeichnet, dass** in Richtung der Strömung (7) der ionisierten Luft vor der Sammelelektrode (2) eine Gegenelektrode (3) angeordnet ist, deren elektrisches Potential höher liegt als das der Ionisator-Elektrode (1) und der Sammelelektrode (2).

7. Vorrichtung gemäß Anspruch 6, **dadurch gekennzeichnet, dass** in Richtung der Luftströmung vor der mindestens einen Elektrode zur Ionisierung von Luft mindestens eine Rückhaltelektrode angebracht ist, deren elektrisches Feld ionisierte Luftmoleküle abstößt und in Richtung der Sammelelektrode lenkt.

8. Vorrichtung gemäß Anspruch 6 oder 7, **dadurch gekennzeichnet, dass** die Elektroden in einem Strömungskanal angeordnet sind.

9. Vorrichtung gemäß Anspruch 8, **dadurch gekennzeichnet, dass** an den Enden des Strömungskanals geerdete Ein- und Austrittselektroden befinden.

10. Vorrichtung gemäß einem oder mehreren der Ansprüche 6 bis 9, **dadurch gekennzeichnet, dass** Ionisator- und Gegenelektroden spiegelsymmetrisch zur Ebene der Sammelelektrode angeordnet sind.

## Claims

1. Method for directly converting wind energy into electrical energy, in which method
air in an air stream is ionized with the aid of an ionizer (1),
the air stream is routed through the electrical field of a collection electrode (2) which acts as an opposing field for ions in the air, and the ions are collected on the collection electrode, the electrical potential of the said collection electrode being higher than that of the ionizer, and discharged,
wherein the ions initially pass through the electrical field of a counter-electrode (3) which is fitted in front of the collection electrode (2), **characterized in that** the electrical potential of the counter-electrode (3) is set such that it is higher than that of the collection electrode (2) but the ionized air molecules can still overcome the electrical field emanating from the counter-electrode (3) with the aid of the wind power.

2. Method according to Claim 1, **characterized in that** the air is ionized by corona discharge, dielectric barrier discharge or with the aid of an electrical spray wire.

3. Method according to Claim 1 or 2, **characterized in that** a retaining electrode is fitted in front of the ionizer, the electrical field of the said retaining electrode being set such that ionized air molecules are repelled and deflected in the direction of the collection electrode.

4. Method according to one or more of Claims 1 to 3, **characterized in that** the air stream is routed through a flow channel in which at least one ionizer, at least one collection electrode, possibly at least one retaining electrode and possibly at least one counter-electrode are arranged.

5. Method according to one or more of Claims 1 to 4, **characterized in that** the potentials of the counter-electrode and of the collection electrode are controlled in accordance with the intensity of the flow of air.

6. Apparatus for directly converting wind energy into electrical energy, having at least one electrode (1) for ionizing air and at least one collection electrode (2), the electrical potential of the said collection electrode being higher than that of the electrode (1) for ionizing the air and the said collection electrode (2) generating an electrical field which counteracts ionized air molecules but can be overcome by the said ionized air molecules with the aid of the wind energy, and also having means for diverting the current which is generated by the voltage produced in the process, **characterized in that** a counter-electrode (3) is arranged in front of the collection electrode (2) in the direction of flow (7) of the ionized air, the electrical potential of the said counter-electrode (3) being higher than that of the ionizer electrode (1) and the collection electrode (2).

7. Apparatus according to Claim 6, **characterized in that** at least one retaining electrode is fitted in front of the at least one electrode for ionizing air in the direction of the flow of air, the electrical field of the said retaining electrode repelling ionized air molecules and deflecting them in the direction of the collection electrode.

8. Apparatus according to Claim 6 or 7, **characterized in that** the electrodes are arranged in a flow channel.

9. Apparatus according to Claim 8, **characterized in that** earthed inlet and outlet electrodes are located at the ends of the flow channel.

10. Apparatus according to one or more of Claims 6 to 9, **characterized in that** the ionizer and counter-electrodes are arranged with mirror-image symmetry with respect to the plane of the collection electrode.

## Revendications

1. Procédé de conversion directe d'énergie éolienne en énergie électrique, dans lequel l'air dans un flux d'air est ionisé à l'aide d'un ionisateur (1), le flux d'air est guidé par le champ électrique d'une électrode collectrice (2), qui agit en tant que contrechamp pour ions dans l'air, et les ions sont collectés et déchargés au niveau de l'électrode collectrice, dont le potentiel électrique est supérieur à celui de l'ionisateur,
dans lequel les ions traversent d'abord le champ électrique d'une contre-électrode (3), qui est montée avant l'électrode collectrice (2), **caractérisé en ce que** le potentiel électrique de la contre-électrode (3) est réglé de sorte qu'il soit supérieur à celui de l'électrode collectrice (2), les molécules d'air ionisées peuvent encore surmonter le champ électrique émanant de la contre-électrode (3) mais avec l'aide de la force éolienne.

2. Procédé selon la revendication 1, **caractérisé en ce que** l'air est ionisé par décharge corona, décharge de barrière diélectrique ou à l'aide d'un pulvérisateur électrique.

3. Procédé selon la revendication 1 ou 2, **caractérisé en ce qu'**avant l'ionisateur est montée une électrode de retenue, dont le champ électrique est réglé de sorte que des molécules d'air ionisées sont repoussées et dirigées en direction de l'électrode collectrice.

4. Procédé selon une ou plusieurs des revendications 1 à 3, **caractérisé en ce que** le flux d'air est guidé par un canal d'écoulement, dans lequel au moins un ionisateur, au moins une électrode collectrice, le cas échéant au moins une électrode de retenue et le cas échéant au moins une contre-électrode sont agencés.

5. Procédé selon une ou plusieurs des revendications 1 à 4, **caractérisé en ce que** les potentiels de la contre-électrode et de l'électrode collectrice sont réglés en fonction de l'intensité de l'écoulement d'air.

6. Dispositif de conversion directe d'énergie éolienne en énergie électrique, avec au moins une électrode (1) pour l'ionisation d'air et au moins une électrode collectrice (2), dont le potentiel électrique est supérieur à celui de l'électrode (1) pour l'ionisation de l'air et qui génère un champ électrique qui contrecarre des molécules d'air ionisées, qui peut cependant être surmonté par celles-ci à l'aide de l'énergie éolienne, ainsi que des moyens de dérivation du courant, qui est généré par la tension ainsi créée, **caractérisé en ce qu'**avant l'électrode collectrice (2) en direction de l'écoulement (7) de l'air ionisé est agencée une contre-électrode (3), dont le potentiel électrique est supérieur à celui de l'électrode d'ionisateur (1) et de l'électrode collectrice (2).

7. Dispositif selon la revendication 6, **caractérisé en ce qu'**avant l'au moins une électrode pour l'ionisation d'air en direction de l'écoulement d'air est montée une électrode de retenue, dont le champ électrique repousse des molécules d'air ionisées et les dirige en direction de l'électrode collectrice.

8. Dispositif selon la revendication 6 ou 7, **caractérisé en ce que** les électrodes sont agencées dans un canal d'écoulement.

9. Dispositif selon la revendication 8, **caractérisé en ce que** des électrodes d'entrée et de sortie mises à la terre se trouvent au niveau des extrémités du canal d'écoulement.

10. Dispositif selon une ou plusieurs des revendications 6 à 9, **caractérisé en ce que** des électrodes d'ionisateur et des contre-électrodes sont agencées en symétrie miroir par rapport au plan de l'électrode collectrice.
